# EUROPÄISCHE PATENTANMELDUNG

(11) **EP 1 916 087 A1**
(43) Veröffentlichungstag der Anmeldung: **30.04.2008**
(21) Anmeldenummer: 07020520.8
(22) Anmeldetag: 19.10.2007
(51) Int. Cl.: B29C 47/02, B29C 47/28, B29C 47/70

(54) **Vorrichtung zur Aufbringung von Kunststoff auf ein Werkstück**

(30) Priorität: 26.10.2006 DE 102006050543; 09.02.2007 DE 102007007139
(71) Anmelder: Drossbach GmbH & Co. KG, 86641 Rain am Lech (DE)
(72) Erfinder: Hetzner, Claus, 90513 Zirndorf (DE); Karl, Johann, 86690 Mertingen (DE)
(74) Vertreter: Altenburg, Udo

(57) **Zusammenfassung**

Die vorliegende Erfindung betrifft eine Vorrichtung zur Aufbringung von Kunststoff auf ein Werkstück (3), umfassend einen Zuführbereich zur Zuführung von fließfähigem Kunststoff, einen dem Zuführbereich (4) in Fließrichtung des Kunststoffs nachgeordneten Verteilerbereich, und einen dem Verteilerbereich nachgeordneten Düsenbereich, wobei eine kreisförmige Öffnung (2) der Vorrichtung von einem ringförmigen Austrittsspalt des Düsenbereichs umfangen ist, wobei ein in der Öffnung (2) angeordnetes Werkstück (3) in einer axialen Richtung gegenüber dem Austrittsspalt bewegbar und über seinen Umfang mit dem Kunststoff belegbar ist. Erfindungsgemäß wird damit eine Vorrichtung zur Aufbringung von Kunststoff auf ein Werkstück (3) bereitgestellt, bei der ein in Umfangsrichtung gleichmäßiger Auftrag auch bei großen Werkstücken ermöglicht ist.

## Beschreibung

Die Erfindung betrifft eine Vorrichtung zur Aufbringung von Kunststoff auf ein Werkstück. Die Erfindung betrifft zudem ein Verfahren zur Herstellung eines Kunststoff-Wellrohrs mittels einer erfindungsgemäßen Vorrichtung sowie ein durch dieses Verfahren hergestelltes Kunststoff-Wellrohr.

EP 1 243 400 B1 beschreibt eine Vorrichtung zum Herstellen von Wellrohren, bei der mittels einer Extrudiervorrichtung und einer nachfolgenden Formstrecke endlose Kunststoffrohre mit einer gewellten Oberfläche herstellbar sind. Solche gewellten Oberflächen ergeben eine gute Ringsteifigkeit bei geringer Materialmenge. Je nach Anforderungen ist es gewünscht, solche oder andere Rohre mit einer weiteren äußeren Kunststoffschicht zu überziehen.

Es ist die Aufgabe der Erfindung, eine Vorrichtung zur Aufbringung von Kunststoff auf ein Werkstück anzugeben, bei der ein in Umfangsrichtung gleichmäßiger Auftrag auch bei großen Werkstücken ermöglicht ist.

Diese Aufgabe wird erfindungsgemäß durch eine Vorrichtung mit den Merkmalen des Anspruchs 1 gelöst. Durch den Verteilerbereich mit ringförmigem Austrittsspalt wird eine in Umfangsrichtung besonders gleichmäßige Aufbringung des Kunststoffs auf das Werkstück ermöglicht.

In bevorzugter Ausführungsform umfasst der Zuführbereich eine erste, insbesondere rohrförmige Zuführleitung, wobei die erste Zuführleitung in eine Mehrzahl sekundärer Zuführleitungen verzweigt. Hierdurch ist bereits im Bereich der zuführenden Leitungen eine erste Verteilung des Kunststoffs auf zumindest zwei Zuführleitungen erreicht, der letztlich möglichst homogen über den Umfang aufgebracht werden soll. Besonders bevorzugt verzweigt dabei zumindest eine der sekundären Zuführleitungen in eine Mehrzahl tertiärer Zuführleitungen, so dass zumindest drei und bevorzugt vier separate, vorteilhaft gleichmäßig über den Umfang verteilte Zuführleitungen vorliegen. Die Leitungen der jeweiligen Verzweigungsebenen können dabei gemäß der Aufteilung des Kunststoffsstroms in ihren Querschnitten zurückgehen.

Weiterhin vorteilhaft umfasst der Zuführbereich eine Mehrzahl von sich in Umfangsrichtung der kreisförmigen Öffnung erstreckenden Verteilerkanälen. Dabei sind die Verteilerkanäle vorteilhaft in mindestens einer Verteilerebene verzweigt. Hierdurch ist ebenfalls eine insbesondere weiter verzweigende Vorverteilung über den Umfang des Werkstücks bereits im Bereich der Kunststoffzuführung ermöglicht.

Im Interesse einer einfachen und zweckmäßigen Herstellung mit gutem Wartungszugang umfasst die Verteilerebene eine Mehrzahl von Plattenelementen, wobei die Verteilerkanäle in den Plattenelementen ausgeformt sind. Zweckmäßig sind dabei die Plattenelemente in der axialen Richtung aufeinander angeordnet, so dass die Kanäle zum Beispiel als Nuten oder Bohrungen in Umfangsrichtung ausgebildet sein können.

Um eine ausreichende Vorverteilung des Kunststoffs im Zuführbereich insbesondere bei Werkstücken mit großen Durchmessern zu gewährleisten, strömt der Kunststoff in einer bevorzugten Weiterbildung von dem Zuführbereich über zumindest 16, insbesondere zumindest 32 in Umfangsrichtung der Öffnung verteilte Kanäle in den Verteilerbereich ein. Allgemein vorteilhaft entspricht die Anzahl der Einströmpunkte dabei einer Potenz der Zahl 2.

In einer bevorzugten Ausführungsform der Erfindung hat der Verteilerbereich einen ringförmigen Hohlraum, wobei der Kunststoff über eine Mehrzahl von in Umfangsrichtung verteilten Zuführkanälen in den Hohlraum einfließt und über einen umlaufenden Ringspalt aus dem Hohlraum austritt. Der umlaufende Hohlraum bewirkt dabei vorrangig eine Homogenisierung des Kunststoffstroms, so dass der Ringspalt bereits besonders gleichmäßig von dem regelmäßig hochviskosen Material durchströmt wird. In vorteilhafter Weiterbildung weist der Hohlraum dabei einen sich in radialer Richtung von Außen nach Innen verjüngenden Querschnitt auf. Hierdurch wird der Durchtrittsquerschnitt für den Kunststoff in Fließrichtung kleiner, was zu einem gewünschten Rückstau führt. Besonders bevorzugt weist dabei der Querschnitt im Wesentlichen die Form eines sich in radialer Richtung nach innen verjüngenden Dreiecks auf. Der Kunststoff hat in dem Hohlraum des Verteilerbereichs bevorzugt eine Hauptströmungsrichtung, die im Wesentlichen radial von außen nach innen verläuft, wobei diese Hauptströmungsrichtung von einer Strömung in Umfangsrichtung überlagert sein kann. Es hat sich gezeigt, dass in einer solchen Anordnung eine gute Homogenisierung des Kunststoffs bei relativ kleinem Bauraum des Verteilerbereichs insbesondere bei Werkstücken von großem Durchmesser realisieren lässt. Eine solche Lösung ist zudem von der Herstellung her einfach und auch bei hohem Druck mechanisch formstabil.

In einer vorteilhaften Weiterbildung hat der Hohlraum eine Wandung mit einer Mehrzahl von spiralförmigen Nuten. Durch diese Nuten wird die fließfähige Kunststoffmasse mit einer Bewegung in Umfangsrichtung beaufschlagt, wobei je nach Auslegung der Nuten eine Beeinflussung der einzelnen Strömungsanteile im Interesse einer guten Homogenisierung des Kunststoffstroms stattfindet. Die Wandung schließt dabei bevorzugt einen Winkel mit einer radialen, zu der axialen Richtung senkrechten Ebene ein, der weniger als etwa 45°, insbesondere weniger als 30°, insbesondere zwischen etwa 18° und etwa 25° beträgt.

Eine einfache Möglichkeit der Feineinstellung des Kunststoffstroms im Verteilerbereich ist gegeben, wenn zumindest einige, insbesondere sämtliche der Zuführkanäle ein Drosselglied zur einstellbaren Veränderung des Querschnitts des Kanals aufweisen. In einfacher Konstruktion können die das die Drosselglieder jeweils eine in den Kanal ragende Stellschraube umfassen. Die Drosselglieder sind vorteilhaft über den Umfang der Vorrichtung verteilt von außen einstellbar, wobei insbesondere eine Verstellung der Drosselglieder während des Betriebs der Vorrichtung ermöglicht ist. Hierdurch kann auf zum Beispiel temperatur- oder ablagerungsbedingte Änderungen der von dem Kunststoff durchströmten Bereiche auch während der laufenden Produktion reagiert werden.

In einfacher konstruktiver Realisierung umfasst der Verteilerbereich eine ringförmige Verteilerscheibe, wobei eine Wandung des Hohlraums in einer axialen Stirnseite der Verteilerscheibe ausgeformt ist. Zweckmäßig sind die Zuführkanäle zu dem Hohlraum dabei als über den Umfang der Verteilerscheibe verteilte axiale Bohrungen ausgebildet. Falls die Zuführkanäle mit Drosselgliedern ausgestattet sind, so können diese zweckmäßig radiale Gewindekanäle umfassen, durch die jeweils eine Stellschraube in den Zuführkanälen mündet.

In vorteilhafter Weiterbildung der Erfindung hat der Düsenbereich einen um die axiale Richtung im Wesentlichen rotationssymmetrischen Ringspalt, wobei der Kunststoff von dem Verteilerbereich durch den Ringspalt zu dem Austrittsspalt fließt. Der Ringspalt weist dabei insbesondere über seinen Verlauf keine Stege auf, so dass der Kunststoffstrom in seiner Homogenität in Umfangsrichtung nicht beeinflusst wird.

In bevorzugter Detailgestaltung hat der Ringspalt zumindest einen ersten und einen zweiten Abschnitt, wobei der erste Abschnitt axial verläuft und der zweite Abschnitt zu der axialen Richtung geneigt verläuft. Durch eine solche Aufteilung des Ringspalts in unterschiedliche Abschnitte kann eine weitere Optimierung des Kunststoffstroms, insbesondere hinsichtlich der Veränderung von Druck und Fließgeschwindigkeit, erzielt werden. Besonders bevorzugt hat dabei zumindest einer der beiden Abschnitte einen sich über seinen Verlauf verjüngenden Querschnitt, so dass eine gezielte Aufstauung des Kunststoffs erfolgt.

In besonders optimierter Detailgestaltung folgt dabei in Fließrichtung der erste Abschnitt des Ringspaltes auf den Verteilerbereich und der zweite Abschnitt folgt auf den ersten Abschnitt, wobei der zweite Abschnitt konische Wandungen mit unterschiedlichen Konuswinkeln aufweist.

In weiter ergänzender Ausführung hat der Ringspalt zudem einen Stauringbereich, wobei durch den Stauringbereich eine lokale Querschnittsverengung des Ringspalts ausgebildet ist. Hierdurch kann in geeigneter Entfernung vor dem Austritt des Kunststoffs eine gezielte Aufstauung erreicht werden. Die Querschnittsverengung kann zum Beispiel als axialer zylindrischer Spalt von besonders kleinem Durchtrittsquerschnitt ausgeformt sein oder auch als ringförmige Nase, die zur Querschnittsverengung lokal in den Spalt hineinragt.

In einer bevorzugten Ausführungsform ist der Austrittsspalt als letzter Abschnitt des Ringspalts ausgebildet ist, wobei der Austrittsspalt eine konische, in Fließrichtung des Kunststoffs radial nach innen geneigte Wandung aufweist. In vorteilhafter Weiterbildung hat der Austrittsspalt dabei zwei konische Wandungen mit unterschiedlichen Konuswinkeln, wobei der Querschnitt des Austrittsspalt sich in Fließrichtung des Kunststoffs verjüngt. Hierdurch ist auf einfache weise ein besonders gleichmäßiger und schwankungsarmer Massenstrom des austretenden Kunststoffs sichergestellt.

Zur Ermöglichung einer Einstellbarkeit und allgemein im Interesse einer einfachen Herstellbarkeit ist der Austrittsspalt zwischen einem ersten Ringelement und einem zweiten Ringelement des Düsenbereichs ausgebildet. Besonders bevorzugt ist dabei der Austrittsspalt über eine einstellbare Bewegbarkeit zumindest eines der Ringelemente veränderbar.

In einer vorteilhaften Ausführung erfolgt die Bewegbarkeit über eine elastische Verformung des Ringelements mittels insbesondere radial wirkender Spannglieder. In einfacher konstruktiver Realisierung umfassen die Spannglieder dabei eine Mehrzahl von über den Umfang des Ringelements verteilten radialen Spannschrauben, wobei die Spannschrauben insbesondere während eines Betriebs der Vorrichtung einstellbar sind. Durch die so gegebene Möglichkeit der radialen Deformation zumindest eines der Ringelemente kann die Homogenität des Materialstroms in Umfangsrichtung optimiert werden, wobei insbesondere während des Betriebs auftretende Veränderungen zum Beispiel der Druckverteilung bzw. mechanischer druckbedingter Deformationen und der Temperatur aufgefangen werden können.

Alternativ oder ergänzend ist es vorgesehen, dass das erste Ringelement und das zweite Ringelement in axialer Richtung relativ zueinander verstellbar sind. Hierdurch ist im Allgemeinen die Größe des Austrittsspalt über den gesamten Umfang veränderbar. In einfacher Ausführung ist dabei an einem der Ringelemente ein wechselbares Distanzmittel zur Verstellung des Abstands zu dem zweiten Ringelement angeordnet.

Alternativ oder ergänzend zu einem auswechselbaren Distanzmittel ist das erste Ringelement über zumindest ein Gewinde relativ zu dem zweiten Ringelement verstellbar. Hierdurch wird eine einfache und stufenlose Verstellung ermöglicht, die je nach Auslegung des Gewindes auch während eines Betriebs der Vorrichtung vorgenommen werden kann.

In besonders bevorzugter Ausführung ist zudem ein zweites Gewinde vorgesehen ist, wobei das erste und das zweite Gewinde eine unterschiedliche Steigung aufweisen. Hierdurch ist die Realisierung eines Differenzgewindes ermöglicht, wobei ein Differenzgewinde allgemein eine besonders feine Einstellung einer Abstandsgröße ermöglicht. In einfacher konstruktiver Realisierung wirkt dabei ein zur axialen Verstellung drehbarer Gewindering mit den beiden Gewinden zusammenwirkt. Zweckmäßig sind zudem das erste Ringelement und das zweite Ringelement über ein axiales Führungsglied axial bewegbar zueinander geführt.

Hierdurch ist eine besonders genaue Zwangsführung ermöglicht, die die relative Bewegbarkeit exakt auf die axiale Richtung einschränkt. Bei dem axialen Führungsglied kann es sich auf einfache weise um in Bohrungen gleitend geführte und möglichst spielfreie Bolzen oder andere geführte Strukturen handeln.

Allgemein bevorzugt sind an der Vorrichtung Heizmittel zur Aufheizung einer Oberfläche des Werkstücks angeordnet. Hierdurch kann die Oberfläche des Werkstücks vor Aufbringung des Kunststoffs auf eine definierte Temperatur gebracht werden, Insbesondere ist im Falle von Werkstücken aus thermoplastischen Kunststoffen ein Anschmelzen der Oberfläche ermöglicht, so dass der aufgebrachte Kunststoff eine gut anhaftende, insbesondere molekulare Verbindung mit der Oberfläche eingehen kann. Geeignete Heizmittel können elektrische Widerstandsheizungen sein, insbesondere Keramikheizungen, oder auch Strahlungsheizsysteme mit Licht, Laserlicht, Infrarotstrahlung, Mikrowellen oder ähnliches. Auch Heißluftheizungen oder andere geeignete Heizsysteme sind denkbar.

In bevorzugter Ausführungsform ist an der Vorrichtung zumindest ein elastischer Abstreifer zur gleitenden Anlage an dem Werkstück angeordnet. Durch solche Abstreifer kann eine Führung des Werkstücks erfolgen. Insbesondere kann eine zumindest grobe gasdichte Abdichtung erfolgen, so dass ein geschlossener und mit definiertem Druck beaufschlagbarer Hohlraum zwischen Werkstück, Kunststoffstrom und Vorrichtung entsteht. Hierdurch ist eine formende Beeinflussung des weichen Kunststoffschlauches im Zuge des Auftrags ermöglicht. Dies gilt insbesondere, wenn durch den aufgebrachten Kunststoff Hohlräume wie etwa Querrillen des Werkstücks eingeschlossen werden, da der in den Hohlräumen eingeschlossene Gasdruck auf diese Weise einstellbar ist.

In besonders bevorzugter Detailgestaltung ist das Werkstück ein Wellrohr, wobei der aufgebrachte Kunststoff eine im Wesentlichen glatte Außenwand des Wellrohrs ausbildet. Das Wellrohr hat dabei bevorzugt eine glatte Innenwand.

Solche Wellrohre mit glatter Innenwand sind bekannt und unterliegen für verschiedene Einsätze, zum Beispiel als Kanalisationsrohre, wachsender Nachfrage. Bisher war allerdings die Aufbringung einer weiteren glatten Schicht von außen problematisch, insbesondere im Fall von Rohren großen Durchmessers.

Bei dem Kunststoff handelt es sich bevorzugt um ein Polyolefin oder einen anderen Kunststoff mit guter Stabilität im erhitzten Zustand.

In einer bevorzugten Ausführungsform ist das Werkstück ein Rohr mit einem Außendurchmesser von zumindest etwa 700 mm. Besonders bevorzugt beträgt dabei der Außendurchmesser des Rohrs mehr als etwa 1200 mm, insbesondere etwa 1800 mm. Es hat sich gezeigt, dass eine Vorrichtung erfindungsgemäßer Konstruktion in besonderem Maß für den Auftrag einer Kunststoffschicht auf sehr große Rohre geeignet ist, wobei die aufgetragene Schicht insbesondere in Umfangsrichtung sehr homogen ist.

Bei einer weiteren bevorzugten Ausführungsform der Erfindung ist es vorgesehen, dass der Verteilerbereich einen ringförmigen Hohlraum aufweist, wobei der Kunststoff über eine Mehrzahl von in Umfangsrichtung verteilten Zuführkanälen in den Hohlraum einfließt und über einen umlaufenden Ringspalt aus dem Hohlraum austritt. Hierbei hat der Hohlraum bevorzugt eine an einem inneren Verteilerteil ausgebildete innere Seitenwandung und eine dieser gegenüberliegende, an einem äußeren Verteilerteil ausgebildete äußere Seitenwandung, wobei jede der Seitenwandungen im Wesentlichen die Form einer Kegelabschnittsfläche hat. Durch die Kegelabschnittsform der beiden Wandungen hat der Hohlraum einen insgesamt gegenüber der axialen Richtung geneigten Verlauf, der zudem regelmäßig in Flussrichtung des Kunststoffs radial nach innen gerichtet sein wird. Hierdurch wird insgesamt ein besonders günstiger Druckverlauf des Kunststoffs in dem Hohlraum erreicht. Der günstige Druckverlauf ermöglicht zudem eine besonders flexible Ausgestaltung des Düsenbereichs bei unverändert belassenem Verteilerbereich.

Zur Verbesserung der Verteilung und Homogenisierung des Kunststoffs ist an zumindest einer der beiden Seitenwandungen, insbesondere an der inneren Seitenwandung, zumindest eine im Wesentlichen in Umfangsrichtung verlaufende Nut ausgebildet.

Zur Erzielung eines günstigen Druckverlaufs im Verteilerbereich beträgt ein Winkel zwischen einer der Seitenwandungen und der axialen Richtung zwischen 10 Grad und 45 Grad, besonders bevorzugt zwischen etwa 20 Grad und etwa 30 Grad. In weiterhin bevorzugter Ausführung haben die kegelabschnittsförmigen Seitenwandungen einen voneinander verschiedenen Konuswinkel, wobei die Differenz zwischen den Konuswinkeln nicht mehr als 5 Grad, insbesondere etwa 3 Grad, beträgt. Zur Verbesserung des Druckverlaufs ist dieser Differenzwinkel zwischen zwischen den beiden kegelabschnittsförmigen Seitenwänden so ausgerichtet, dass sich der radiale Abstand zwischen den Seitenwänden in Fließrichtung des Kunststoffs vergrößert.

In geeigneter konstruktiver Gestaltung ist der Ringspalt zumindest abschnittsweise zwischen einem inneren Ringelement und einem äußeren Ringelement ausgebildet, wobei das äußere Ringelement über ein Stellmittel verstellbar ausgebildet ist. Hierdurch lässt sich durch eine entsprechende Justage, bevorzugt auch eine Nachjustage während der Produktion, eine gleichmäßige gewünschte Wandstärke der aus dem Ringspalt austretenden Kunststoffbahn einstellen. In einfacher Realisierung umfasst das Stellmittel dabei ein radial wirkendes Stellglied, das gegen das äußere Verteilerteil abgestützt ist.

Bei einer geeigneten Ausführungsform der Erfindung ist ein Endbereich des Ringspalts von einem weiteren Ringelement begrenzt. Besonders bevorzugt ist dabei das weitere Ringelement über ein Stellmittel verstellbar, so dass insbesondere bei Versionen mit relativ langen Düsenbereichen eine mehrfache Einstellbarkeit des Ringspalts in zumindest zwei Bereichen gegeben ist.

Zweckmäßig hat das Stellmittel des weiteren Ringelements dabei ein radial wirkendes Stellglied, das insbesondere gegen das äußere Ringelement abgestützt ist.

Be einer besonders bevorzugten Ausführungsform hat der ringförmige Hohlraum einen Durchmesser von mehr als 1700 mm, insbesondere mehr als 1800 mm. Die besonderen Merkmale einer erfindungsgemäßen Vorrichtung ermöglichen dabei den gleichmäßigen und somit qualitativ hochwertigen Auftrag einer Kunststoffschicht bei solch großen Durchmessern. Der Ringspalt hat dabei bevorzugt an einem austrittseitigen Ende einen Durchmesser von mehr als 1600 mm, besonders bevorzugt von mehr als 1700 mm. Im Allgemeinen wird das erzeugte Kunststoffteil somit einen Durchmesser haben, der nur geringfügig unter dem austrittsseitigen Spaltdurchmesser liegt.

Eine weitere bevorzugte Ausführungsform der Erfindung umfasst einen ersten Satz von Ringelementen und zumindest einen zweiten Satz von Ringelementen, wobei jeder der Sätze von Ringelementen lösbar an dem Verteilbereich festlegbar ist und der Austrittsspalt durch den jeweils am Verteilerbereich festgelegten Satz von Ringelementen ausgebildet wird. Hierdurch können bei gegebenem, zumindest im Durchmesser unverändertem Verteilerbereich je nach angebrachtem Satz von Ringelementen Kunststoffteile von verschiedenem Durchmesser beschichtet werden. Dies erhöht die Flexibilität und Kosteneffizienz der erfindungsgemäßen Vorrichtung erheblich. In bevorzugter Detailgestaltung hat daher der erste Satz von Ringelementen einen ersten Durchmesser eines austrittsseitigen Endes des Austrittsspalts, der von einem entsprechenden zweiten Durchmesser des austrittseitigen Endes des Austrittsspalts des zweiten Satzes von Ringelementen verschieden ist.

Bevorzugt ist der erste Durchmesser dabei größer als etwa 1600 mm, insbesondere größer als etwa 1700 mm. Weiterhin bevorzugt ist der zweite Durchmesser kleiner als etwa 1200 mm, insbesondere kleiner als etwa 1000 mm.

Gerade bei solch großen Unterschieden im Durchmesser der Ringelementsätze kann es zur Einsparung von Bauteilkosten vorgesehen sein, dass die Anzahl der Ringelemente des ersten Satzes von Ringelementen von der Anzahl der Ringelemente des zweiten Satzes von Ringelementen verschieden ist. Dabei wird im allgemeinen ein Ringelementsatz mit großem Durchmesser des Austrittsspalts eher wenige Ringelemente umfassen, da aufgrund des zum Verteilerbereich ähnlichen Durchmessers ein kurzer Düsenbereich ermöglicht ist.

Die Erfindung betrifft zudem ein Verfahren zur Herstellung eines Kunststoff-Wellrohrs, umfassend die Schritte des Zuführens eines Kunststoff-Wellrohrs zu einer Vorrichtung nach einem der Ansprüche 1 bis 28 und des Aufbringens einer Kunststoffschicht auf das zugeführte Wellrohr mittels der Vorrichtung. Durch ein solches Verfahren können insbesondere Wellrohre mit im Wesentlichen glatter Außenwandung hergestellt werden.

Die Erfindung betrifft zudem ein Kunststoff-Wellrohr, hergestellt durch das Verfahren nach Anspruch 29. In bevorzugter Detailgestaltung bildet die aufgebrachte Kunststoffschicht eine im Wesentlichen glatte Außenwandung des Wellrohrs aus.

Weitere Vorteile und Merkmale der Erfindung ergeben sich aus dem nachfolgend beschriebenen Ausführungsbeispiel sowie aus den abhängigen Ansprüchen.

Nachfolgend werden mehrere bevorzugte Ausführungsbeispiele einer erfindungsgemäßen Vorrichtung beschrieben und anhand der anliegenden Zeichnungen näher erläutert.
- Fig. 1: zeigt eine Schnittansicht einer ersten Ausführungsform einer erfindungsgemäßen Vorrichtung entlang der Linie A-A aus Fig. 3.
- Fig. 2: zeigt eine räumliche Darstellung der Vorrichtung aus Fig. 1.
- Fig. 3: zeigt eine Draufsicht von hinten auf die Vorrichtung aus Fig. 1 und Fig. 2.
- Fig. 4: zeigt eine Draufsicht auf eine Verteilerscheibe der Vorrichtung aus Fig. 1.
- Fig. 5: zeigt eine Schnittansicht der Verteilerscheibe aus Fig. 4 entlang der Linie A-A.
- Fig. 6: zeigt eine teilweise räumliche Darstellung der Verteilerscheibe aus Fig. 4.
- Fig. 7: zeigt eine Detailvergrößerung der Vorrichtung aus Fig. 1.
- Fig. 8: zeigt eine teilweise Schnittdarstellung eines zweiten Ausführungsbeispiels einer erfindungsgemäßen Vorrichtung.
- Fig. 9: zeigt eine teilweise Schnittdarstellung eines dritten Ausführungsbeispiels einer erfindungsgemäßen Vorrichtung.
- Fig. 10: zeigt eine Schnittansicht einer weiteren Ausführungsform einer erfindungsgemäßen Vorrichtung entlang der Schnittlinie A-A- aus Fig. 3.
- Fig. 11: zeigt eine Abwandlung der Vorrichtung aus Fig. 10.

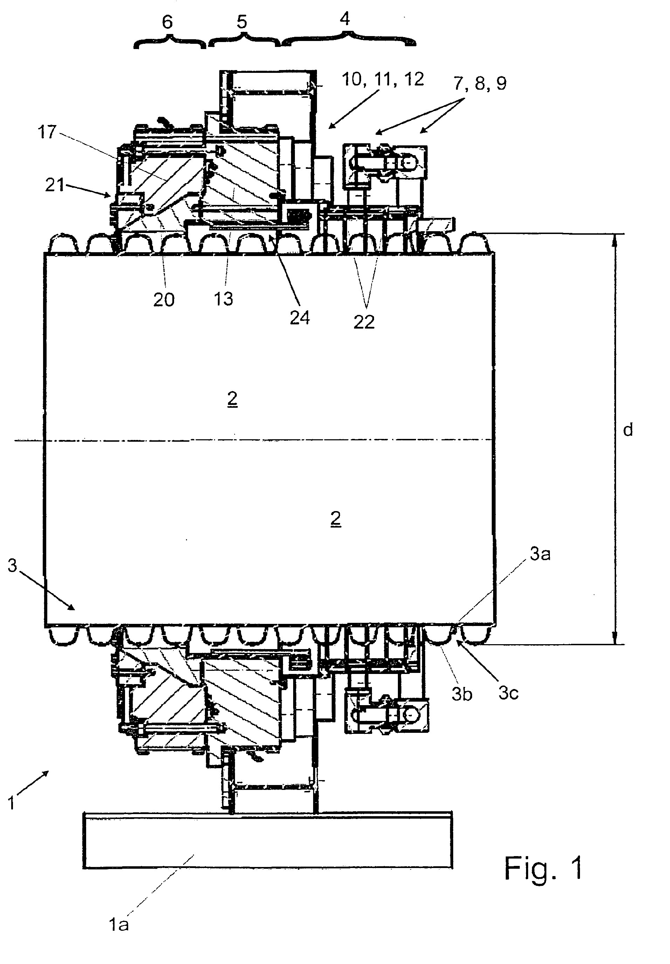

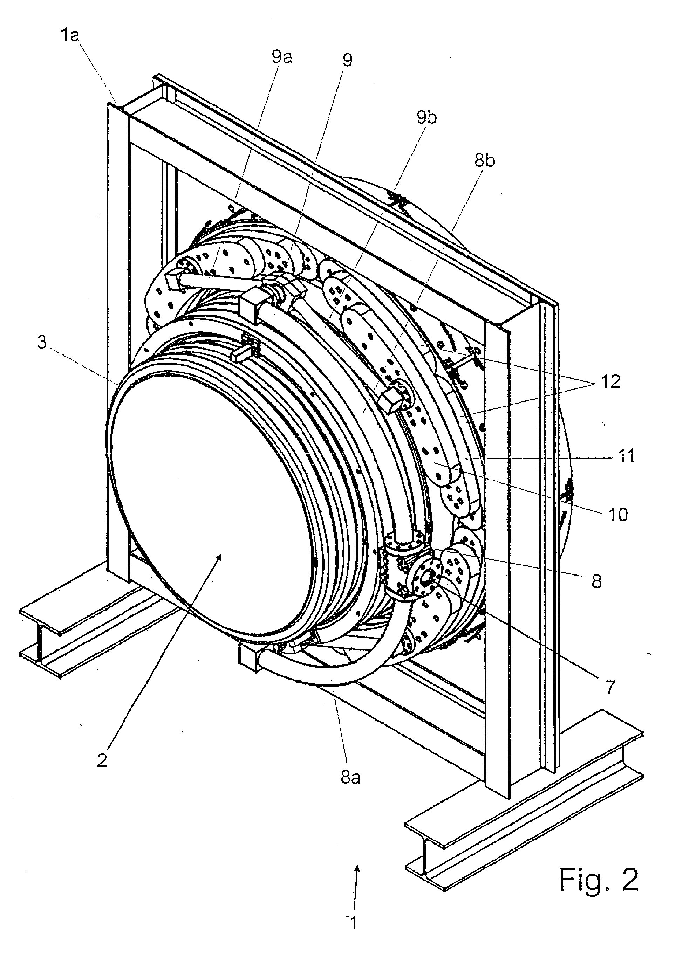

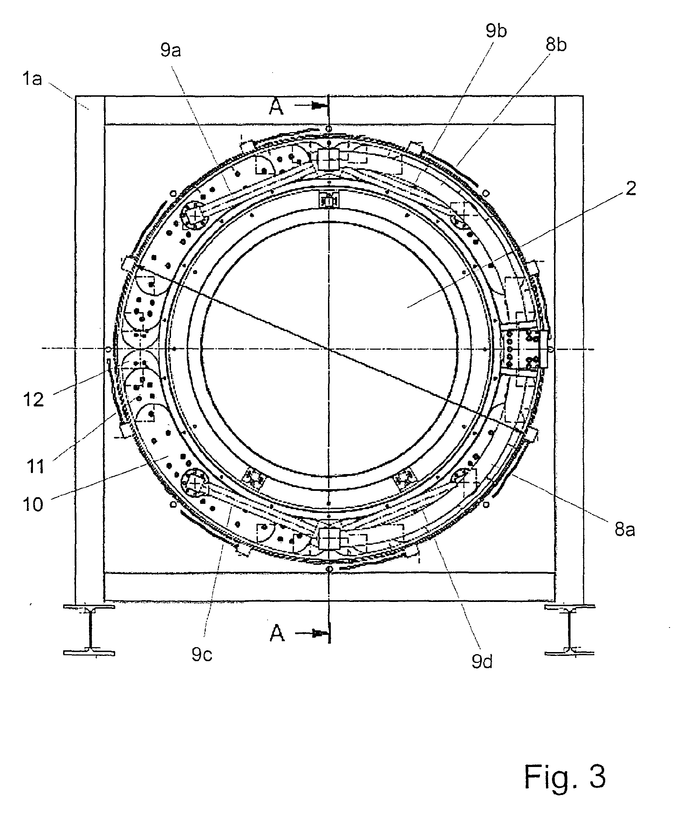

Die erfindungsgemäße Vorrichtung gemäß dem ersten Ausführungsbeispiel aus Fig. 1 umfasst einen insgesamt etwa ringförmigen Ummantelungskopf 1, der in einem Tragrahmen 1a gehalten ist. Der Ummantelungskopf hat eine durchgehende kreisförmige zentrale Öffnung 2, durch die ein Werkstück 3 durchführbar ist. Vorliegend ist das Werkstück ein Wellrohr 3 aus einem Kunststoff, insbesondere ein Polyolefin. Das Wellrohr 3 hat eine glatte innere Schicht 3a und eine gewellte äußere Schicht mit Wellenbergen 3b und Wellentälern 3c. Das Wellrohr hat einen äußeren Durchmesser d von etwa 1700 mm. Die Zeichnungen Fig. 1 bis Fig. 7 sind jeweils maßstabsgerecht, so dass die wesentlichen Abmessungen der Vorrichtung durch entsprechende Skalierung entnehmbar sind. Das Werkstück 3 wird zur Auftragung einer Kunststoffschicht in axialer Richtung durch die Öffnung 2 hindurchbewegt, und zwar gemäß der Darstellung Fig. 1 von rechts nach links.

Der Ummantelungskopf 1 hat einen Zuführbereich 4, einen Verteilerbereich 5 und einen Düsenbereich 6, die jeweils in axialer Richtung hintereinander angeordnet sind und jeweils von dem erhitzten und fließfähigen Kunststoffmaterial durchströmt werden.

Der Zuführbereich 4 hat eine primäre Hauptzuführleitung 7, über die der fließfähige Kunststoff von einem Extruder (nicht dargestellt) kommend unter Druck in die Vorrichtung eingebracht wird. Dieser Kunststoffstrom wird in dem Zuführbereich in insgesamt 32 Teilströme aufgeteilt, die im Wesentlichen gleich groß sind.

Hierzu umfasst der Zuführbereich 4 ausgehend von der Hauptleitung 7 zunächst ein erstes Verteilerstück 8, durch das der Strom auf zwei sekundäre Zuführleitungen 8a, 8b aufgeteilt wird. Jede der sekundären Zuführleitungen 8a, 8b mündet jeweils in Verteilerstücke 9, in denen der Strom auf insgesamt vier tertiäre Zuführleitungen 9a, 9b, 9c, 9d aufgeteilt wird. Auf diese Weise ist ein erster Verteilungsbereich auf Basis von mehrfach verzweigten diskreten rohrartigen Leitungen 8a, 8b, 9a, 9b, 9c, 9c gegeben.

Dem ersten Verteilerbereich folgt ein zweiter Verteilerbereich, in dem die weitere Aufteilung des Kunststoffstroms erfolgt. Der zweite Verteilerbereich besteht aus einer Mehrzahl von sich in Umfangsrichtung erstreckenden Plattenelementen 10. Die vier tertiären Zuführleitungen 9a, 9b, 9c, 9d münden jeweils in eines von vier Plattenelementen 10 einer ersten Verteilerebene des zweiten Verteilerbereichs. In jedem der Plattenelemente 10 ist ein bezüglich der Einmündung symmetrisch verzweigter Verteilerkanal (nicht dargestellt) in Form einer Nut vorgesehen, so dass die Anzahl der Kunststoffströme wiederum verdoppelt wird. Jedes der Plattenelemente 10 der ersten Ebene ist flächig auf einem Plattenelement 11 einer zweiten Ebene festgelegt, wobei durch entsprechende Anordnung von Durchbohrungen und nutenförmigen Zuführkanälen der Plattenelemente 11 eine weitere Verdoppelung der Materialströme erfolgt. Jedes der Plattenelemente 11 der zweiten Plattenelementebene ist wiederum auf jeweils zwei von insgesamt acht Plattenelementen 12 einer dritten Ebene festgelegt, wodurch auf analoge Weise eine letzte Verdoppelung der Anzahl von Strömungskanälen auf insgesamt 32 Kanäle erfolgt.

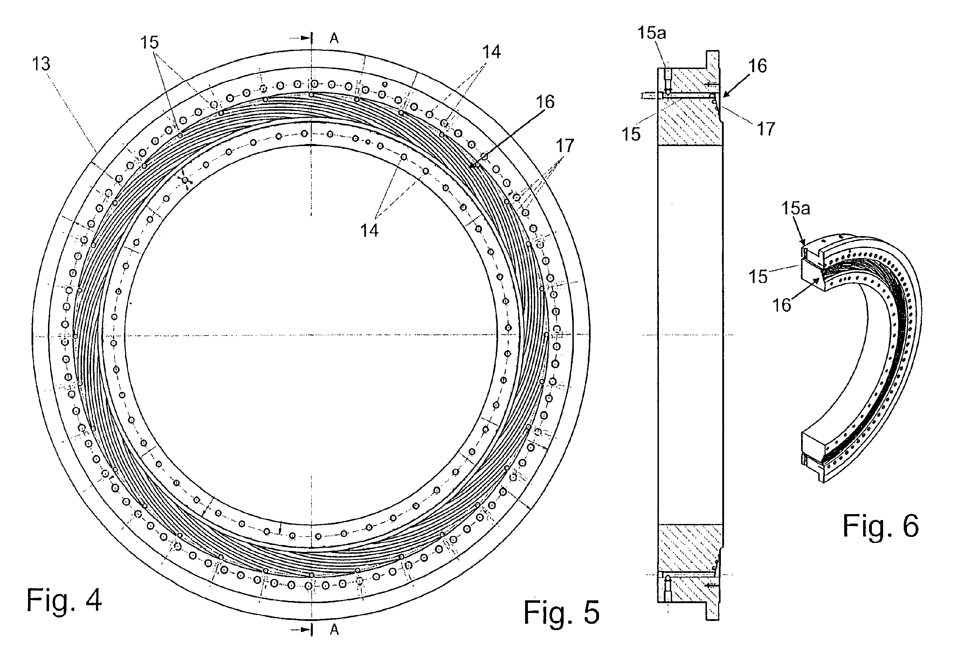

Die letzte Ebene von Plattenelementen 12 ist auf einer ringförmigen Verteilerscheibe 13 axial angeschraubt. Eine detaillierte Darstellung der Verteilerscheibe 13 zeigen Fig. 4 bis Fig. 6. Die Verteilerscheibe 13 hat eine Vielzahl von Bohrungen und/oder Sackgewinden 14 zur Montage der einerseits angrenzenden Plattenelemente 12 und gegenüberliegend angrenzender Ringelemente (siehe nachfolgende Beschreibung).

Zudem hat die Verteilerscheibe 13 zweiunddreißig als Bohrungen ausgeformte axiale Kanäle 15, die in gleichen Winkelabständen auf einem Umfangskreis verteilt angeordnet sind und mit den als Nuten ausgeformten 32 Zuführkanälen der letzten Ebene von Plattenelementen 12 verbunden sind. In jeden der axialen Kanäle 15 mündet eine radial von außen kommende Stichbohrung 15a mit Gewinde. In diesen Stichbohrungen 15a sind Stellschrauben (nicht dargestellt) aufgenommen, die sich entsprechend radial erstrecken und von außen zugänglich sind. Je nach Einstellung der Stellschrauben ist der freie Querschnitt einer jeden der axialen Kanäle 15 veränderbar, so dass die Stichbohrungen 15a mit den Stellschrauben die Funktion eines Drosselglieds haben.

Auf der den Plattenelementen 12 entgegengesetzten Seite der Verteilerscheibe 13 ist die axiale Stirnfläche der Verteilerscheibe 13 strukturiert. Die Struktur weist eine im Querschnitt nach Fig. 5 geneigte, also kegelabschnittförmige Wandung 16 auf, wobei in der Wandung 16 eine Anzahl von spiralförmigen Nuten 17 eingebracht sind. Jede der Nuten 17 verläuft über einen Winkelbereich von etwa 35-40 Grad vom oberen zum unteren Ende der Wandung 16. Über diesen Verlauf flacht die axiale Tiefe der Nuten jeweils ab (siehe Querschnitt Fig. 5). Im oberen bzw. radial äußeren Endbereich der Wandung 16 enden die 32 Kanäle 15 in der Wandung 16. Die Neigung der Wandung gegenüber der Radialrichtung (bzw. der Ebene der Zeichnung Fig. 4) beträgt etwa 22 Grad. Insbesondere die hier angegebenen Werte der Winkelbereiche des Verlaufs der Nuten 17 sowie die Neigung der Wandung 16 sind nur exemplarisch und können je nach Optimierung der Vorrichtung andere Werte annehmen.

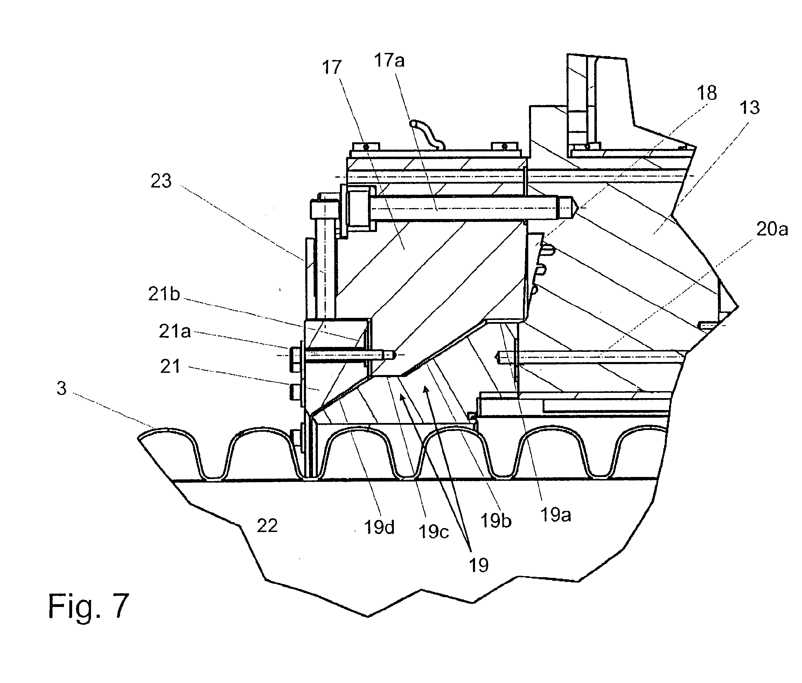

Die mit der Wandung 16 strukturierte Stirnseite der Verteilerscheibe 13 liegt an einer in Wesentlichen planen Seite eines mit der Verteilerscheibe 13 über Schrauben 17a verschraubten oberen Ringelements 17 an, so dass durch die Wandung 16 und das Ringelement 17 ein Hohlraum 18 (siehe vergrößerte Darstellung Fig. 7) ausgebildet ist, der im Querschnitt im Wesentlichen die Form eines radial nach innen zeigenden spitzen Dreiecks hat.

Dieser Hohlraum 18 bildet funktionell den Hauptteil des Verteilerbereichs 5 der Vorrichtung. Der durch die Bohrungen 15 an 32 zirkular gleichverteilten Eintrittspunkten zugeführte Kunststoff durchströmt den Hohlraum 18 im Wesentlichen radial von außen nach innen, wobei durch die spiralförmigen Nuten 17 zudem eine Strömungskomponente in Umfangsrichtung beaufschlagt wird. Hierdurch wird der Kunststoffstrom, der zunächst in Umfangsrichtung auf 32 Kanäle diskret verteilt war, in Umfangsrichtung gut homogenisiert.

Das in radialer Richtung innere Ende des Hohlraums 18 bzw. die "Spitze des Dreiecks" mündet in einen in Umfangsrichtung durchgehenden, nicht unterbrochenen Ringspalt 19, durch den der Düsenbereich 6 des Kunststoffstroms definiert ist.

Die Wände des Ringspalts 19 werden aus Oberflächen von insgesamt drei Ringelementen gebildet, nämlich dem mit der Verteilerscheibe 13 fest verschraubten Ringelement 17, einem über die Verteilerscheibe 13 durchgreifende Schrauben 20a ebenfalls an der Verteilerscheibe 13 festgelegten inneren Ringelement 20 und einem mit dem oberen Ringelement über Schrauben 21 a verschraubten vorderen Ringelement 21. Durch entsprechende Ausformung der zur Ausbildung des Ringspalts 19 beabstandet gegenüberliegenden jeweiligen Oberflächen der Ringelemente 17, 20, 21 weist der Spalt einen für die Strömung des Kunststoffs optimierten Verlauf auf:
An die radial innere Spitze des Hohlraums 18 schließt zunächst ein sich axial erstreckender, also zylindermantelförmiger erster Abschnitt 19a an, der einen konstanten Strömungsquerschnitt aufweist. Hieran schließt ein zweiter Abschnitt 19b an, der in Fließrichtung konisch radial nach innen verläuft, wobei zudem die beiden konischen Wandabschnitte der involvierten Ringelemente 17, 20 einen unterschiedlichen Konuswinkel aufweisen. Hierdurch verjüngt sich der Spalt über seinen Verlauf, so dass seine Durchtrittsfläche stärker als linear mit dem Fließweg abnimmt.

An diesen doppelt konischen zweiten Abschnitt 19b schließt sich ein Stauringbereich 19c in Form eines wiederum axialen Abschnitts an, der bedingt durch die Wandabstände eine reduzierte Durchtrittsfläche hat.

Nach dem Stauringbereich 19c folgt letztlich ein Austrittsspalt 19d, der sich ähnlich wie der zweite Abschnitt 19b doppelt konisch verjüngt und aus dem der Kunststoff austritt. Die äußere konische Wandung des Austrittsspalts 19d wird von dem vorderen Ringelement 21 gebildet. Zwischen dem vorderen Ringelement 21 und dem oberen Ringelement 17 befinden sich Abstandsmittel 21b in Form von eingelegten Distanzscheiben oder einem einzelnen Distanzring. Hierdurch ist die Größe des Austrittsspalts 19d justierbar.

An den Austrittsspalt 19d schließt sich ein elastischer Abstreifer 22 an, der auf der welligen Oberfläche des Wellrohrs 3 gleitet. Am anderen Ende der Vorrichtung auf Höhe des Zuführbereichs 4 sind zudem weitere Abstreifer 22 vorgesehen, so dass zwischen der Innenwand der Vorrichtung und der Außenwand des

Werkstücks 3 ein geschlossenes Volumen gebildet ist. Je nach Auslegung kann das Volumen zur einen Seite auch durch die austretende Kunststoffbahn abgeschlossen werden. Durch gezielte Druckbeaufschlagung mittels vorgesehener Gaskanäle (nicht dargestellt) kann die Aufbringung des Kunststoffs beeinflusst werden. Zum Beispiel kann so der Gasdruck in den geschlossenen Volumenbereichen zwischen dem aufgebrachten Kunststoff und den Tälern der Wellrippen eingestellt werden, um nach Abkühlung des Kunststoffs eine gewünschte konkave, konvexe oder glatte Oberfläche im Bereich der Rippentäler zu erzielen.

Das vordere Ringelement 21 wird zudem von einer Anzahl von über seinen Umfang verteilten und in radialen Gewindedurchbohrungen des oberen Rings abgestützten Spannschrauben 23 kraftbeaufschlagt. Durch die Spannschrauben 23 ist insgesamt ein Spannglied bereitgestellt, mittels dessen eine im Wesentlichen radiale Deformation des vorderen Ringelements 20 eingestellt werden kann, so dass der Austrittsspalt 19d in seiner Größe in Richtung seines Umfangs veränderbar ist. Hierdurch kann eine Feineinstellung des Kunststoffstroms auch während des Betriebs erreicht werden, um eine definierte und über den Umfang konstante Dicke der aufgetragenen Schicht zu gewährleisten.

Die Vorrichtung weist zudem innenseitig der Öffnung 2 ein Heizelement 24 auf, das in kurzem Abstand vor der Oberfläche des Werkstücks 3 positioniert ist. Durch das Heizelement 24 wird die Oberfläche des Werkstücks, vorliegend ein Kunststoff-Wellrohr, erwärmt und insbesondere angeschmolzen, so dass der aufgetragene Kunststoff eine feste Verbindung mit der Oberfläche eingeht. Hierzu bestehen Werkstück und aufgetragener Kunststoff zweckmäßig aus dem gleichen Material oder entsprechend geeigneten Materialpaarungen.

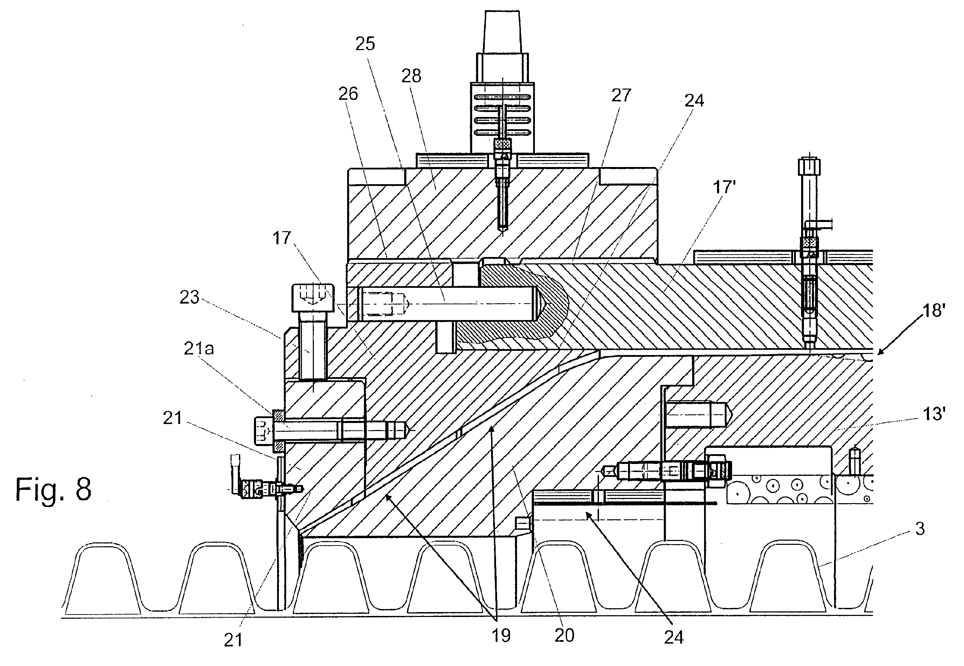

Eine Abwandlung des ersten Ausführungsbeispiels ist in Fig. 8 dargestellt. Funktionell ähnliche Bauteile sind dabei mit den gleichen Bezugszeichen versehen. Ein wesentlicher Unterschied besteht darin, dass der Ringspalt 19 über Gewindemittel stufenlos in seiner Größe verstellbar ist, insbesondere während des Betriebs. Hierzu ist das obere Ringelement 17 zweigeteilt ausgelegt, wobei ein stationärer Teil 17' ortsfest zu einer hier anders geformten Verteilerscheibe 13' und dem Rest der Vorrichtung angeordnet ist. Ein beweglicher Teil 17 liegt über eine axiale Zylinderfläche 24 axial verschiebbar an dem stationären Teil an. Das vordere Ringelement 21 ist wiederum fest mit dem beweglichen Ringelementteil 17 verbunden und kann somit gemeinsam mit dem Teil 17 in axialer Richtung relativ zu dem stionären Teil 17' und einem ebenfalls ortsfesten unteren Ringelement 20 bewegt werden. Durch diese axiale Bewegung wird die Größe des Ringspalts 19 verändert.

Das bewegliche Teil 17 ist über Führungsmittel in Form von Bolzen 25 axial bewegbar geführt. Die zueinander beweglichen Ringelementteile 17, 17' weisen jeweils an ihrem Außenumfang ein erstes Außengewinde 26 und ein zweites Außengewinde 27 auf, wobei die Gewinde eine leicht unterschiedliche Steigung haben. Ein Gewindering 28 greift mit entsprechend verschiedenen Gewindebereichen an den jeweiligen Gewinden 26, 27 gleichzeitig an. Durch Drehen des Gewinderinges 28, der die Vorrichtung außen umlaufend umfängt, kann somit nach Art eines Differenzgewindes eine besonders feine Einstellung des Ringspalts 19 vorgenommen werden.

Bei der in Fig. 8 gezeigten Abwandlung erstreckt sich der Hohlraum 18' des Verteilerbereichs im Wesentlichen in axialer Richtung und nicht in radialer Richtung. Die Anordnung einer Gewindeverstellung des Ringspalts 19 ist aber auch im Fall des ersten Ausführungsbeispiels problemlos möglich. Hierzu kann das obere Ringelement 17 zum Beispiel auf Höhe des Endes des ersten Abschnitts 19 analog zu der Zylinderfläche 24 aufgeschnitten und so in einen stationären und einen beweglichen Teil getrennt werden.

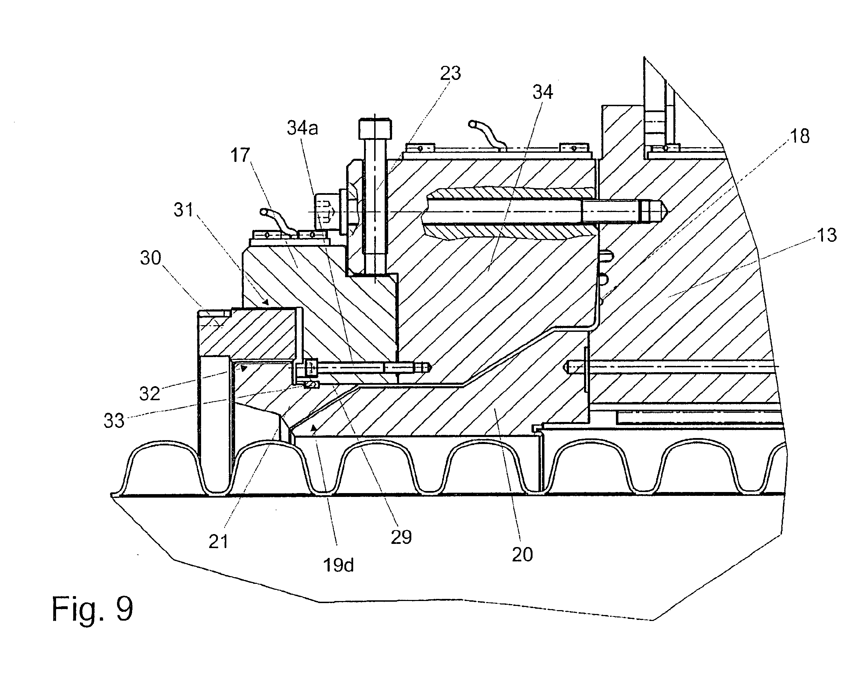

Eine weitere Abwandlung des ersten Ausführungsbeispiels ist in Fig. 9 gezeigt. Als einzige wesentliche Änderung gegenüber dem ersten Ausführungsbeispiel ist dabei eine stufenlose Verstellbarkeit des Austrittsspalts 19d vorgesehen, die ähnlich der zuvor beschriebenen Verstellmöglichkeit des zweiten Ausführungsbeispiels konzipiert ist.

Dabei ist das vordere Ringelement 21, das die radial äußere Wandung des Austrittsspalts 19d bildet, nicht wie im ersten Ausführungsbeispiel fest mit dem oberen Ringelement 17 verschraubt, sondern in axialer Richtung gegenüber diesem bewegbar. Die Bewegung ist über einander überlappende zylindrische Führungsflächen 29 zwangsgeführt, wobei wie im zweiten Ausführungsbeispiel (dort Zylinderfläche 24) zugleich eine Abdichtung des Ringspalts 19 durch die Überlappung und möglichst spielfreie Berührung der Zylinderflächen 29 gegeben ist.

Ein Differenzgewindering 30 ist zwischen dem Ringelement 17 und dem vorderen Ringelement 21 angeordnet. Der Gewindering 30 hat ein in axialer Richtung erstrecktes Außengewinde 31, das mit einem entsprechenden Innengewinde an einer Abstufung des Ringelements 17 kämmt. Ein zu dem Außengewinde 31 konzentrisches Innengewinde 32 des Gewinderings umfängt das vordere Ringelement 21 und kämmt mit einem entsprechenden Gewinde auf dessen Außenfläche.

Ähnlich wie im zweiten Ausführungsbeispiel weisen die beiden Gewinde 31, 32 des Gewinderings 30 unterschiedliche Steigungen auf, so dass bei Drehung des Gewinderings um einen bestimmten Winkel eine besonders kleine und somit fein einstellbare axiale Bewegung des vorderen Ringelements 21 relativ zu dem oberen Ringelement 17 und somit dem unteren bzw. inneren Ringelement 22 erfolgt.

Zwischen oberem Ringelement 17 und vorderem Ringelement 21 ist zumindest eine axiale Nut mit einer darin eingesetzten Passfeder 33 vorgesehen. Hierdurch wird ein axiales Führungsmittel bereitgestellt, durch das ein Mitdrehen zum Beispiel des vorderen Ringelements 21 bei Verdrehen des Gewinderings 30 verhindert wird.

Aufgrund der konstruktiven Anordnung des Differenzgewinderings 30 zwischen vorderem und oberem Ringelement ist auch die Anordnung des Spannglieds bzw. der Mehrzahl von radialen Spannschrauben 23 abgewandelt. Die Spannschrauben 23 drücken im dritten Ausführungsbeispiel nicht unmittelbar auf das vordere Ringelement 21, sondern auf das obere Ringelement 17. Verschraubt bzw. gegengelagert sind die Spannschrauben 23 dabei in einem von dem oberen Ringelement 17 separaten Zwischenring 34. Der Zwischenring 34 und das obere Ringelement 17 entsprechen zusammengenommen in etwa dem oberen Ringelement 17 aus Fig. 7 bzw. dem ersten Ausführungsbeispiel. Der Zwischenring ist an seiner einen Seite fest mit der Verteilerscheibe 13 verschraubt und bildet entsprechend eine Wandung des Hohlraums 18 aus. Auf der anderen Seite ist der Zwischenring 34 mittels Schrauben 34a mit dem oberen Ringelement 17 verschraubt. Durch geeignete Auslegung dieser Verschraubung verbleibt aufgrund der hohen Andruckkräfte der Spannschrauben 23 eine ausreichende Möglichkeit der radialen Deformation von oberem Ringelement 17 und über die Anlagefläche 29 auch vorderem Ringelement 21, um eine entsprechende Feinjustage des Austrittsspalt in Umfangsrichtung vorzunehmen. Ebenso wie im ersten Ausführungsbeispiel sind auch hier die Spannschrauben auch während der Produktion zugänglich, so dass Nachjustierungen sowohl mittels des Gewinderinges 30 als auch mittels der Spannschrauben 23 während der Produktion erfolgen können.

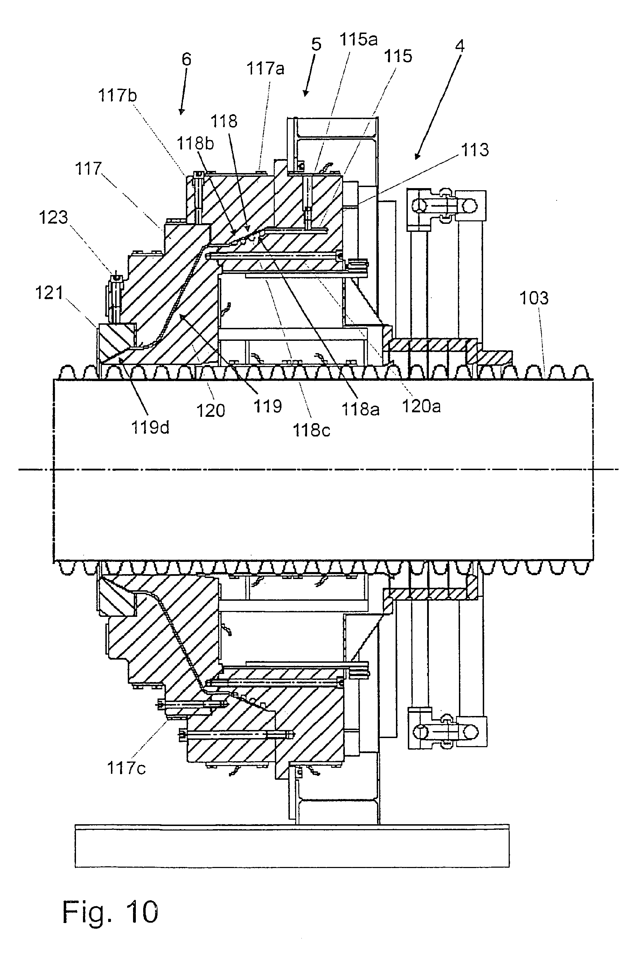

Bei einem in Fig. 10 dargestellten weiteren bevorzugten Ausführungsbeispiel der Erfindung umfasst der Verteilerbereich 5 einen Hohlraum 118, der im Unterschied zu dem Hohlraum des ersten Ausführungsbeispiels eine andere Form aufweist. Es handelt sich im Wesentlichen um einen Ringraum, der von einer inneren Seitenwandung 118a und einer äußeren Seitenwandung 118b begrenzt ist, die jeweils die Form einer Kegelabschnittsfläche aufweisen. In der inneren Seitenwandung 118a sind eine Anzahl von spiralförmigen Nuten 118c vorgesehen, durch die der durch den Hohlraum 118 strömende Kunststoff analog den vorhergehenden Ausführungsbeispielen besser verteilt wird.

Die konischen Wandungen des Hohlraums 118 sind in Strömungsrichtung des Kunststoffs radial nach innen geneigt. Der Konuswinkel der beiden Wandungen ist dabei ähnlich groß, aber nicht identisch. Der Winkel der äußeren Seitenwandung 118a relativ zur axialen Richtung beträgt etwa 22 Grad und der Winkel der äußeren Wandung ist um etwa 2,5 Grad größer. In Strömungsrichtung des Kunststoffs nimmt der Abstand zwischen den Seitenwandungen 118a, 118b daher etwas zu.

Der Hohlraum 118 ist analog zum ersten Ausführungsbeispiel über eine Mehrzahl von insgesamt 32 Zuführkanälen 115 mit dem Zuführbereich 4 verbunden, der genau wie im ersten Ausführungsbeispiel gestaltet ist. Die Zuführkanäle 115 sind als Bohrungen in einem ringförmigen inneren Verteilerteil 113 ausgebildet, an dem auch die innere Seitenwandung 118a des Hohlraums 118 ausgeformt ist. Ebenfalls analog zum ersten Ausführungsbeispiel treffen Stichbohrungen 115a radial von außen auf die Kanäle 115, um über darin aufgenommene Stellschrauben den Strömungsquerschnitt der einzelnen Kanäle einstellen zu können.

Mit dem inneren Verteilerteil 113 ist ein äußeres Verteilerteil 117a fest verschraubt, an dem die äußere Seitenwandung 118b des Hohlraums 118 ausgeformt ist.

Der Hohlraum 118, der in der Hauptsache der Homogenisierung des über die 32 Kanäle 115 verteilt zugeführten Kunststoffstroms dient, mündet in einem Ringspalt 119. Dieser ist zunächst zwischen einem äußeren Ringelement 117 und einem inneren Ringelement 112 ausgebildet. Das Ringelement 117 ist über als Spannschrauben 117b ausgebildete Stellglieder in radialer Richtung verstellbar, und zwar je nach Anforderungen über Versatz und/oder elastische Deformation. In axialer Richtung ist das Ringelement 117 über Klemmschrauben 117c fest mit dem äußeren Verteilerteil 117a verschraubbar, wobei diese Schrauben zweckmäßig zur Einstellung des äußeren Ringelements 117 etwas gelöst werden.

Das innere Ringelement 120 ist über das innere Verteilerelement 113 durchgreifende axiale Schrauben 120a fest mit dem inneren Verteilerelement 113 verbunden.

Bei dem in Fig. 10 gezeigten Beispiel ist nach dem äußeren Ringelement 117 noch ein weiteres Ringelement 121 angeordnet, wobei das austrittsseitige Ende 119d des Ringspalts 119 zwischen den weiteren Ringelement 121 und dem inneren Ringelement 120 ausgebildet ist. Das weitere Ringelement 121 ist mittels als Spannschrauben 123 ausgebildeten Stellgliedern 123 radial verstellbar, wobei die Spannschrauben 123 an dem äußeren Ringelement 117 in einem Gewinde aufgenommen bzw. abgestützt sind. Hierdurch ist eine weitere Verstellbarkeit des Ringspalts 119 in seinem Austrittsbereich 119d gegeben.

Das in der Darstellung Fig. 10 gezeigte Wellrohr 103 hat einen inneren Rohrdurchmesser von 762 mm (30 Zoll, Durchmesser bis zu der mit Wellrippen belegten Innenwandung des Rohrs 103). Der Durchmesser des Ringspalts 119 an seinem austrittsseitigen Ende beträgt etwa 890 mm. Der kleinste Durchmesser des Hohlraums 118, der an dessen austrittsseitigem Ende zu messen ist, beträgt etwa 1870 mm. Hieraus resultiert ein relativ langer Verlauf des Ringspalts 119, so dass das weitere Ringelement zur Justage vorteilhaft ist.

Insgesamt bilden das innere Ringelement 120, das äußere Ringelement 117 und das weitere Ringelement 121 einen Satz von Ringelementen, der bei unverändert belassenen sonstigen Komponenten der Vorrichtung nach Art eines Moduls austauschbar ist.

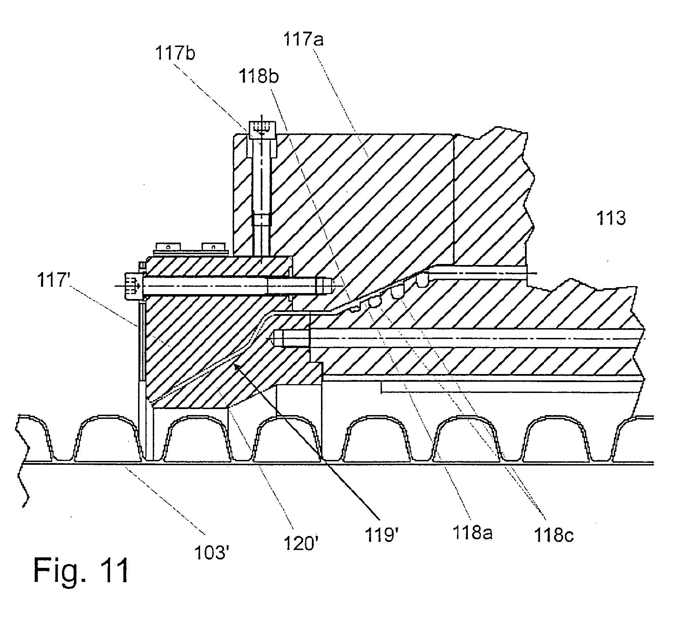

Fig. 11 zeigt die gleiche Vorrichtung wie Fig. 10, wobei jedoch der dort gezeigte erste Satz von Ringelementen 117, 121, 121 gegen einen anderen, zweiten Satz von Ringelementen 117', 120' ausgetauscht worden ist. Der innere Durchmesser des Austrittsspalts 119d ist erheblich größer, nämlich bis zu etwa 1800 mm. Bei dem Rohr 103' handelt es sich entsprechend um ein Wellrohr mit einem Innendurchmesser von 60 Zoll. Aufgrund des entsprechend kürzeren Ringspalts 119' kann auf eines der Ringelemente und eine Einstellmöglichkeit verzichtet werden, so dass der Düsenbereich bzw. Ringspalt 119 nur noch von einem inneren Ringelement 120' und einem äußeren Ringelement 117' gebildet wird.

Je nach an dem Verteilerbereich 104 angebrachten Satz von Ringelementen kann ein Kunststoffteil mit verschiedenem Durchmesser beschichtet werden. In der vorliegenden Ausführungsform ist es wie dargestellt angestrebt, wenigstens den Bereich von etwa 30 Zoll bis etwa 60 Zoll Innendurchmesser der Wellrohre abzudecken, wofür lediglich die Sätze von Ringelementen ausgetauscht werden müssen.

Zusammengefasst sieht also die der vorliegenden Anmeldung zugrundeliegende Erfindung eine Vorrichtung zur Aufbringung von Kunststoff auf ein Werkstück, bei der ein in Umfangsrichtung gleichmäßiger Auftrag auch bei großen Werkstücken ermöglicht ist, ein Verfahren zur Herstellung eines Kunststoff-Wellrohrs sowie ein durch das Verfahren bereitgestelltes Kunststoff-Wellrohr wie folgt vor:
1. Eine Vorrichtung zur Aufbringung von Kunststoff auf ein Werkstück, umfassend
   einen Zuführbereich zur Zuführung von fließfähigem Kunststoff,
   einen dem Zuführbereich in Fließrichtung des Kunststoffs nachgeordneten Verteilerbereich, und
   einen dem Verteilerbereich nachgeordneten Düsenbereich, wobei eine kreisförmige Öffnung der Vorrichtung von einem ringförmigen Austrittsspalt des Düsenbereichs umfangen ist,
   wobei ein in der Öffnung angeordnetes Werkstück in einer axialen Richtung gegenüber dem Austrittsspalt bewegbar und über seinen Umfang mit dem Kunststoff belegbar ist.
2. Vorrichtung nach Punkt 1, wobei der Zuführbereich eine erste, insbesondere rohrförmige Zuführleitung umfasst, wobei die erste Zuführleitung in eine Mehrzahl sekundärer Zuführleitungen verzweigt.
3. Vorrichtung nach Punkt 2, wobei zumindest eine der sekundären Zuführleitungen in eine Mehrzahl tertiärer Zuführleitungen verzweigt.
4. Vorrichtung nach einem der Punkte 2 oder 3, wobei der Zuführbereich eine Mehrzahl von sich in Umfangsrichtung der kreisförmigen Öffnung erstreckenden Verteilerkanälen aufweist.
5. Vorrichtung nach Punkt 4, wobei die Verteilerkanäle in mindestens einer Verteilerebene verzweigt sind.
6. Vorrichtung nach Punkt 5, wobei die Verteilerebene eine Mehrzahl von Plattenelementen umfasst, wobei die Verteilerkanäle in den Plattenelementen ausgeformt sind.
7. Vorrichtung nach Punkt 6, wobei die Plattenelemente in der axialen Richtung aufeinander angeordnet sind.
8. Vorrichtung nach einem der Punkte 2 bis 7, wobei der Kunststoff von dem Zuführbereich über zumindest 16, insbesondere zumindest 32 in Umfangsrichtung der Öffnung verteilte Kanäle in den Verteilerbereich einströmt.
9. Vorrichtung nach einem der voranstehenden Punkte, wobei der Verteilerbereich einen ringförmigen Hohlraum aufweist, wobei der Kunststoff über eine Mehrzahl von in Umfangsrichtung verteilten Zuführkanälen in den Hohlraum einfließt und über einen umlaufenden Ringspalt aus dem Hohlraum austritt.
10. Vorrichtung nach Punkt 9, wobei der Hohlraum einen sich in radialer Richtung von außen nach innen verjüngenden Querschnitt aufweist.
11. Vorrichtung nach Punkt 10, wobei der Querschnitt im Wesentlichen die Form eines sich in radialer Richtung nach innen verjüngenden Dreiecks aufweist.
12. Vorrichtung nach einem der Punkte 9 bis 11, wobei der Hohlraum eine Wandung mit einer Mehrzahl von spiralförmigen Nuten aufweist.
13. Vorrichtung nach Punkt 12, wobei die Wandung einen Winkel mit einer radialen, zu der axialen Richtung senkrechten Ebene einschließt, der weniger als etwa 45°, insbesondere weniger als 30°, insbesondere zwischen etwa 18° und etwa 25° beträgt.
14. Vorrichtung nach einem der Punkte 9 bis 13, wobei zumindest einige, insbesondere sämtliche der Zuführkanäle ein Drosselglied zur einstellbaren Veränderung des Querschnitts des Kanals aufweisen.
15. Vorrichtung nach Punkt 14, wobei die Drosselglieder jeweils eine in den axialen Kanal ragende Stellschraube umfassen.
16. Vorrichtung nach Punkt 14 oder 15, wobei die Drosselglieder über den Umfang der Vorrichtung verteilt von außen einstellbar sind, wobei insbesondere eine Verstellung der Drosselglieder während des Betriebs der Vorrichtung ermöglicht ist.
17. Vorrichtung nach einem der Punkte 9 bis 16, wobei der Verteilerbereich eine ringförmige Verteilerscheibe umfasst, wobei eine Wandung des Hohlraums in einer axialen Stirnseite der Verteilerscheibe ausgeformt ist.
18. Vorrichtung nach einem der Punkte 9 bis 17, wobei die Zuführkanäle als über den Umfang der Verteilerscheibe verteilte axiale Bohrungen ausgebildet sind.
19. Vorrichtung nach einem der voranstehenden Punkte, wobei der Düsenbereich einen um die axiale Richtung im Wesentlichen rotationssymmetrischen Ringspalt aufweist, wobei der Kunststoff von dem Verteilerbereich durch den Ringspalt zu dem Austrittsspalt fließt.
20. Vorrichtung nach Punkt 19, wobei der Ringspalt zumindest einen ersten Abschnitt und einen zweiten Abschnitt aufweist, wobei der erste Abschnitt axial verläuft und der zweite Abschnitt zu der axialen Richtung geneigt verläuft.
21. Vorrichtung nach Punkt 20, wobei zumindest einer der beiden Abschnitte einen sich über seinen Verlauf verjüngenden Querschnitt aufweist.
22. Vorrichtung nach Punkt 21, wobei der erste Abschnitt dem Verteilerbereich nachfolgt und der zweite Abschnitt dem ersten Abschnitt nachfolgt, wobei der zweite Abschnitt konische Wandungen mit unterschiedlichen Konuswinkeln aufweist.
23. Vorrichtung nach einem der Punkte 19 bis 22, wobei der Ringspalt einen Stauringbereich aufweist, wobei durch den Stauringbereich eine lokale Querschnittsverengung des Ringspalts ausgebildet ist.
24. Vorrichtung nach einem der Punkte 19 bis 23, wobei der Austrittsspalt als letzter Abschnitt des Ringspalts ausgebildet ist, wobei der Austrittsspalt eine konische, in Fließrichtung des Kunststoffs radial nach innen geneigte Wandung aufweist.
25. Vorrichtung nach Punkt 24, wobei der Austrittsspalt zwei konische Wandungen mit unterschiedlichen Konuswinkeln aufweist, wobei der Querschnitt des Austrittsspalt sich in Fließrichtung des Kunststoffs verjüngt.
26. Vorrichtung nach einem der voranstehenden Punkte, wobei der Austrittsspalt zwischen einem ersten Ringelement und einem zweiten Ringelement des Düsenbereichs ausgebildet ist.
27. Vorrichtung nach Punkt 26, wobei der Austrittsspalt über eine einstellbare Bewegbarkeit zumindest eines der Ringelemente veränderbar ist.
28. Vorrichtung nach Punkt 27, wobei die Bewegbarkeit über eine elastische Verformung des Ringelements mittels insbesondere radial wirkender Spannglieder erfolgt.
29. Vorrichtung nach Punkt 28, wobei die Spannglieder eine Mehrzahl von über den Umfang des Ringelements verteilten radialen Spannschrauben umfassen, wobei die Spannschrauben insbesondere während eines Betriebs der Vorrichtung einstellbar sind.
30. Vorrichtung nach einem der Punkte 26 bis 29, wobei das erste Ringelement und das zweite Ringelement in axialer Richtung relativ zueinander verstellbar sind.
31. Vorrichtung nach Punkt 30, wobei an einem der Ringelemente ein wechselbares Distanzmittel zur Verstellung des Abstands zu dem anderen Ringelement angeordnet ist.
32. Vorrichtung nach Punkt 30, wobei das eine Ringelement über zumindest ein Gewinde relativ zu dem zweiten Ringelement verstellbar ist.
33. Vorrichtung nach Punkt 32, wobei zudem ein zweites Gewinde vorgesehen ist, wobei das erste und das zweite Gewinde eine unterschiedliche Steigung aufweisen.
34. Vorrichtung nach Punkt 33, wobei ein zur axialen Verstellung drehbarer Gewindering mit den beiden Gewinden zusammenwirkt.
35. Vorrichtung nach einem der Punkte 30 bis 34, wobei das erste Ringelement und das zweite Ringelement über ein axiales Führungsglied axial bewegbar zueinander geführt sind.
36. Vorrichtung nach einem der voranstehenden Punkte, wobei an der Vorrichtung Heizmittel zur Aufheizung einer Oberfläche des Werkstücks angeordnet sind.
37. Vorrichtung nach einem der voranstehenden Punkte, wobei an der Vorrichtung zumindest ein elastischer Abstreifer zur gleitenden Anlage an dem Werkstück angeordnet ist.
38. Vorrichtung nach einem der voranstehenden Punkte, wobei das Werkstück ein Wellrohr ist, wobei der aufgebrachte Kunststoff eine im Wesentlichen glatte Außenwand des Wellrohrs ausbildet.
39. Vorrichtung nach Punkt 38, wobei das Wellrohr eine glatte Innenwand aufweist.
40. Vorrichtung nach einem der voranstehenden Punkte, wobei der Kunststoff ein Polyolefin ist.
41. Vorrichtung nach einem der voranstehenden Punkte, wobei das Werkstück ein Rohr mit einem Außendurchmesser von zumindest etwa 700 mm ist.
42. Vorrichtung nach Punkt 41, wobei der Außendurchmesser des Rohrs mehr als etwa 1200 mm, insbesondere etwa 1700 mm, beträgt.
43. Vorrichtung nach einem der voranstehenden Punkte, wobei der Verteilerbereich einen ringförmigen Hohlraum aufweist, wobei der Kunststoff über eine Mehrzahl von in Umfangsrichtung verteilten Zuführkanälen in den Hohlraum einfließt und über einen umlaufenden Ringspalt aus dem Hohlraum austritt.
44. Vorrichtung nach Punkt 43, wobei der Hohlraum eine an einem inneren Verteilerteil ausgebildete innere Seitenwandung und eine dieser gegenüberliegende, an einem äußeren Verteilerteil ausgebildete äußere Seitenwandung aufweist, wobei jede der Seitenwandungen im Wesentlichen die Form einer Kegelabschnittsfläche hat.
45. Vorrichtung nach Punkt 44, wobei an zumindest einer der beiden Seitenwandungen, insbesondere an der inneren Seitenwandung, zumindest eine im Wesentlichen in Umfangsrichtung verlaufende Nut ausgebildet ist.
46. Vorrichtung nach einem der Punkte 44 oder 45, wobei ein Winkel zwischen einer der Seitenwandungen und der axialen Richtung zwischen 10 Grad und 45 Grad, insbesondere zwischen etwa 20 Grad und etwa 30 Grad, beträgt.
47. Vorrichtung nach einem der Punkte 44 bis 46, wobei die kegelabschnittsförmigen Seitenwandungen einen voneinander verschiedenen Konuswinkel aufweisen, wobei die Differenz zwischen den Konuswinkeln nicht mehr als etwa 5 Grad, insbesondere etwa 3 Grad, beträgt.
48. Vorrichtung nach einem der Punkte 44 bis 47, wobei der Ringspalt zumindest abschnittsweise zwischen einem inneren Ringelement und einem äußeren Ringelement ausgebildet ist, wobei das äußere Ringelement über ein Stellmittel verstellbar ausgebildet ist.
49. Vorrichtung nach Punkt 48, wobei das Stellmittel ein radial wirkendes Stellglied umfasst, das gegen das äußere Verteilerteil abgestützt ist.
50. Vorrichtung nach einem der Punkte 48 oder 49, wobei ein Endbereich des Ringspalts von einem weiteren Ringelement begrenzt ist.
51. Vorrichtung nach Punkt 50, wobei das weitere Ringelement über ein Stellmittel verstellbar ist.
52. Vorrichtung nach Punkt 51, wobei das Stellmittel ein radial wirkendes Stellglied umfasst, das insbesondere gegen das äußere Ringelement abgestützt ist.
53. Vorrichtung nach einem der Punkte 48 bis 52, wobei der ringförmige Hohlraum einen Durchmesser von mehr als 1700 mm, insbesondere mehr als 1800 m, aufweist.
54. Vorrichtung nach Punkt 53, wobei der Ringspalt an einem austrittseitigen Ende einen Durchmesser von mehr als 1600 mm, insbesondere mehr als 1700 mm, aufweist.
55. Vorrichtung nach einem der voranstehenden Punkte, umfassend einen ersten Satz von Ringelementen und zumindest einen zweiten Satz von Ringelementen, wobei jeder der Sätze von Ringelementen lösbar an dem Verteilerbereich festlegbar ist und der Austrittsspalt durch den jeweils am Verteilerbereich festgelegten Satz von Ringelementen ausgebildet wird.
56. Vorrichtung nach Punkt 55, wobei der erste Satz von Ringelementen einen ersten Durchmesser eines austrittsseitigen Endes des Austrittsspalts aufweist, der von einem entsprechenden zweiten Durchmesser des austrittsseitigen Endes des Austrittsspalts des zweiten Satzes von Ringelementen verschieden ist.
57. Vorrichtung nach Punkt 55, wobei der erste Durchmesser größer als etwa 1600 mm, insbesondere größer als etwa 1700 mm, ist.
58. Vorrichtung nach Punkt 56 oder 57, wobei der zweite Durchmesser kleiner als etwa 1200 mm, insbesondere kleiner als etwa 1000 mm, ist.
59. Vorrichtung nach einem der Punkte 55 bis 58, wobei die Anzahl der Ringelemente des ersten Satzes von Ringelementen von der Anzahl der Ringelemente des zweiten Satzes von Ringelementen verschieden ist.
60. Verfahren zur Herstellung eines Kunststoff-Wellrohrs, umfassend die Schritte
   A. Zuführen eines Kunststoff-Wellrohrs zu einer Vorrichtung nach einem der Punkte 1 bis 59;
   B. Aufbringen einer Kunststoffschicht auf das zugeführte Wellrohr mittels der Vorrichtung.
61. Kunststoff-Wellrohr, hergestellt durch das Verfahren nach Punkt 60.
62. Kunststoff-Wellrohr nach Punkt 61, wobei die aufgebrachte Kunststoffschicht eine im Wesentlichen glatte Außenwandung des Wellrohrs ausbildet.

## Patentansprüche

1. Vorrichtung zur Aufbringung von Kunststoff auf ein Werkstück, umfassend
einen Zuführbereich (4) zur Zuführung von fließfähigem Kunststoff,
einen dem Zuführbereich in Fließrichtung des Kunststoffs nachgeordneten Verteilerbereich (5), und
einen dem Verteilerbereich (5) nachgeordneten Düsenbereich (6), wobei eine kreisförmige Öffnung (2) der Vorrichtung von einem ringförmigen Austrittsspalt (19d) des Düsenbereichs (6) umfangen ist,
wobei ein in der Öffnung (2) angeordnetes Werkstück (3) in einer axialen Richtung gegenüber dem Austrittsspalt (19d) bewegbar und über seinen Umfang mit dem Kunststoff belegbar ist.

2. Vorrichtung nach Anspruch 1, **dadurch gekennzeichnet, dass** der Zuführbereich (4) eine erste, insbesondere rohrförmige Zuführleitung (7) umfasst,
wobei die erste Zuführleitung (7) in eine Mehrzahl sekundärer Zuführleitungen (8a, 8b) verzweigt.

3. Vorrichtung nach Anspruch 2, **dadurch gekennzeichnet, dass** zumindest eine der sekundären Zuführleitungen (8a, 8b) in eine Mehrzahl tertiärer Zuführleitungen (9a, 9b, 9c, 9d) verzweigt.

4. Vorrichtung nach einem der Ansprüche 2 oder 3, **dadurch gekennzeichnet, dass** der Zuführbereich eine Mehrzahl von sich in Umfangsrichtung der kreisförmigen Öffnung erstreckenden Verteilerkanälen aufweist.

5. Vorrichtung nach Anspruch 4, **dadurch gekennzeichnet, dass** die Verteilerkanäle in mindestens einer Verteilerebene (10, 11, 12) verzweigt sind.

6. Vorrichtung nach Anspruch 5, **dadurch gekennzeichnet, dass** die Verteilerebene eine Mehrzahl von Plattenelementen (10, 11, 12) umfasst, wobei die Verteilerkanäle in den Plattenelementen (10, 11, 12) ausgeformt sind.

7. Vorrichtung nach Anspruch 6, **dadurch gekennzeichnet, dass** die Plattenelemente (10, 11, 12) in der axialen Richtung aufeinander angeordnet sind.

8. Vorrichtung nach einem der Ansprüche 2 bis 7, **dadurch gekennzeichnet, dass** der Kunststoff von dem Zuführbereich über zumindest 16, insbesondere zumindest 32 in Umfangsrichtung der Öffnung verteilte Kanäle (15) in den Verteilerbereich (5) einströmt.

9. Vorrichtung nach einem der vorhergehenden Ansprüche, **dadurch gekennzeichnet, dass** der Verteilerbereich einen ringförmigen Hohlraum (18) aufweist, wobei der Kunststoff über eine Mehrzahl von in Umfangsrichtung verteilten Zuführkanälen (15) in den Hohlraum (18) einfließt und über einen umlaufenden Ringspalt (19) aus dem Hohlraum (18) austritt.

10. Vorrichtung nach Anspruch 9, **dadurch gekennzeichnet, dass** der Hohlraum (18) einen sich in radialer Richtung von außen nach innen verjüngenden Querschnitt aufweist.

11. Vorrichtung nach einem der Ansprüche 9 oder 10, **dadurch gekennzeichnet, dass** der Verteilerbereich (5) eine ringförmige Verteilerscheibe (13) umfasst, wobei eine Wandung des Hohlraums in einer axialen Stirnseite der Verteilerscheibe (13) ausgeformt ist.

12. Vorrichtung nach einem der vorhergehenden Ansprüche, **dadurch gekennzeichnet, dass** der Düsenbereich (6) einen um die axiale Richtung im Wesentlichen rotationssymmetrischen Ringspalt (19) aufweist, wobei der Kunststoff von dem Verteilerbereich (4) durch den Ringspalt (19) zu dem Austrittsspalt (19d) fließt.

13. Vorrichtung nach Anspruch 12, **dadurch gekennzeichnet, dass** der Ringspalt (19) zumindest einen ersten Abschnitt (19a) und einen zweiten Abschnitt (19b) aufweist, wobei der erste Abschnitt axial verläuft und der zweite Abschnitt (19b) zu der axialen Richtung geneigt verläuft.

14. Vorrichtung nach Anspruch 13, **dadurch gekennzeichnet, dass** zumindest einer der beiden Abschnitte (19b) einen sich über seinen Verlauf verjüngenden Querschnitt aufweist.

15. Vorrichtung nach einem der vorhergehenden Ansprüche, **dadurch gekennzeichnet, dass** der Austrittsspalt (19d) zwischen einem ersten Ringelement (20) und einem zweiten Ringelement (21) des Düsenbereichs (6) ausgebildet ist.

16. Vorrichtung nach einem der vorhergehenden Ansprüche, **dadurch gekennzeichnet, dass** an der Vorrichtung Heizmittel (24) zur Aufheizung einer Oberfläche des Werkstücks (3) angeordnet sind.

17. Vorrichtung nach einem der vorhergehenden Ansprüche, **dadurch gekennzeichnet, dass** an der Vorrichtung zumindest ein elastischer Abstreifer (22) zur gleitenden Anlage an dem Werkstück angeordnet ist.

18. Vorrichtung nach einem der vorhergehenden Ansprüche, **dadurch gekennzeichnet, dass** das Werkstück ein Wellrohr (3) ist, wobei der aufgebrachte Kunststoff eine im Wesentlichen glatte Außenwand des Wellrohrs ausbildet.

19. Vorrichtung nach einem der vorhergehenden Ansprüche, **dadurch gekennzeichnet, dass** der Kunststoff ein Polyolefin ist.

20. Vorrichtung nach einem der vorhergehenden Ansprüche, **dadurch gekennzeichnet, dass** das Werkstück (3) ein Rohr mit einem Außendurchmesser von zumindest etwa 700 mm ist.

21. Vorrichtung nach Anspruch 20, **dadurch gekennzeichnet, dass** der Außendurchmesser des Rohrs mehr als etwa 1200 mm, insbesondere etwa 1700 mm, beträgt.

22. Vorrichtung nach einem der vorhergehenden Ansprüche, **dadurch gekennzeichnet, dass** der Verteilerbereich einen ringförmigen Hohlraum (118) aufweist, wobei der Kunststoff über eine Mehrzahl von in Umfangsrichtung verteilten Zuführkanälen (115) in den Hohlraum (118) einfließt und über einen umlaufenden Ringspalt (119) aus dem Hohlraum (118) austritt.

23. Vorrichtung nach Anspruch 43, **dadurch gekennzeichnet, dass** der Hohlraum (118) eine an einem inneren Verteilerteil (113) ausgebildete innere Seitenwandung (118a) und eine dieser gegenüberliegende, an einem äußeren Verteilerteil (113a) ausgebildete äußere Seitenwandung (118b) aufweist, wobei jede der Seitenwandungen (118a, 118b) im Wesentlichen die Form einer Kegelabschnittsfläche hat.

24. Vorrichtung nach Anspruch 23, **dadurch gekennzeichnet, dass** der Ringspalt (119) zumindest abschnittsweise zwischen einem inneren Ringelement (120) und einem äußeren Ringelement (117) ausgebildet ist, wobei das äußere Ringelement (117) über ein Stellmittel (113a) verstellbar ausgebildet ist.

25. Vorrichtung nach Anspruch 24, **dadurch gekennzeichnet, dass** der ringförmige Hohlraum (118) einen Durchmesser von mehr als 1700 mm, insbesondere mehr als 1800 m, aufweist.

26. Vorrichtung nach Anspruch 25, **dadurch gekennzeichnet, dass** der Ringspalt (119) an einem austrittseitigen Ende einen Durchmesser von mehr als 1600 mm, insbesondere mehr als 1700 mm, aufweist.

27. Vorrichtung nach einem der vorhergehenden Ansprüche, umfassend einen ersten Satz von Ringelementen und zumindest einen zweiten Satz von Ringelementen, wobei jeder der Sätze von Ringelementen lösbar an dem Verteilerbereich festlegbar ist und der Austrittsspalt (119d) durch den jeweils am Verteilerbereich festgelegten Satz von Ringelementen ausgebildet wird.

28. Vorrichtung nach Anspruch 27, **dadurch gekennzeichnet, dass** der erste Satz von Ringelementen einen ersten Durchmesser eines austrittsseitigen Endes des Austrittsspalts aufweist, der von einem entsprechenden zweiten Durchmesser des austrittsseitigen Endes des Austrittsspalts des zweiten Satzes von Ringelementen verschieden ist.

29. Verfahren zur Herstellung eines Kunststoff-Wellrohrs, umfassend die Schritte
A. Zuführen eines Kunststoff-Wellrohrs zu einer Vorrichtung nach einem der Ansprüche 1 bis 28;
B. Aufbringen einer Kunststoffschicht auf das zugeführte Wellrohr mittels der Vorrichtung.

30. Kunststoff-Wellrohr, hergestellt durch das Verfahren nach Anspruch 29.
